# EUROPÄISCHE PATENTANMELDUNG

(11) **EP 2 669 075 A1**
(43) Veröffentlichungstag der Anmeldung: **04.12.2013**
(21) Anmeldenummer: 13002513.3
(22) Anmeldetag: 13.05.2013
(51) Int. Cl.: B29C 70/30

(54) **Verfahren und Vorrichtung zum gleichmäßigen Aufbringen von Fasern auf im Wesentlichen plattenförmige Substrate**

(30) Priorität: 29.05.2012 DE 102012010387
(71) Anmelder: Fraunhofer-Gesellschaft zur Förderung der angewandten Forschung e.V., 80686 München (DE)
(72) Erfinder: Woidasky, Jörg, Dr.-Ing., 76149 Karlsruhe (DE); Forberger, Jens, 76131 Karlsruhe (DE); Potyra, Tobias, London, ON, N6C 4C7 (CA); Wagner, Daniel, 75015 Bretten (DE)
(74) Vertreter: Lenz, Steffen

(57) **Zusammenfassung**

Es wird ein Verfahren zum gleichmäßigen Aufbringen von Fasern auf ein Substrat vorgeschlagen, indem die Fasern einer Auftragseinrichtung zugeführt und von dieser auf das Substrat aufgebracht werden. Um für eine homogene Verteilung der Fasern auf dem Substrat zu sorgen, sieht die Erfindung vor, dass die Fasern mittels eines Zyklons in einer im Wesentlichen senkrecht zu ihrer Förderrichtung angeordneten Ebene in Rotation versetzt und die in Rotation versetzten Fasern der dem Zyklon unmittelbar nachgeordneten, oberhalb des Substrates positionierten Auftragseinrichtung zugeführt werden. Als Auftragseinrichtung wird dabei ein nach unten offener Kasten verwendet, welchem die Fasern an seiner oberen, der offenen Unterseite entgegengesetzten Seite zugeführt werden, so dass zumindest einige der Fasern im Innern des Kastens der Auftragseinrichtung infolge Zentrifugalkraft an die Seitenwände des Kastens beschleunigt werden, wonach sie infolge Gravitation auf das Substrat aufgebracht werden. Die Erfindung betrifft ferner eine zur Durchführung eines solchen Verfahrens geeignete Vorrichtung zum gleichmäßigen Aufbringen von Fasern auf Substrate, welche beispielsweise Teil einer SMC-Anlage sein kann.

## Beschreibung

Die Erfindung betrifft ein Verfahren zum gleichmäßigen Aufbringen von Fasern auf ein Substrat, indem die Fasern einer Auftragseinrichtung zugeführt und von dieser auf das Substrat aufgebracht werden. Die Erfindung bezieht sich ferner auf eine insbesondere zur Durchführung eines solchen Verfahrens geeignete Vorrichtung zum gleichmäßigen Aufbringen von Fasern auf ein Substrat, mit einer Auftragseinrichtung, welcher die Fasern zuführbar sind.

Derartige Verfahren und Vorrichtungen finden beispielsweise bei der Herstellung von abgelängten oder endlosen Harzmatten, sogenannter Sheet Molding Compounds (SMC), Verwendung, wobei den üblicherweise aus duroplastischen Reaktionsharzen gefertigten Matten die Fasern aufgegeben werden, wonach die Reaktionsharze unter Bildung von faserverstärkter Halbzeuge vorgehärtet werden. Die Endbearbeitung zu zwei oder dreidimensionalen Formteilen kann anschließend in entsprechenden Formwerkzeugen oder Pressen vonstatten gehen, in welchen die faserverstärkte Polymermatrix gänzlich aufgehärtet und in der Regel vernetzt wird. Als problematisch kann sich insbesondere das Aufbringen der Fasern, wie beispielsweise Schnittfasern aus natürlichen (z.B. Holz, Cellulose, Miscanthus, Ramie, Hanf, Schilfgras etc.), synthetischen Materialien (z.B. Glas, Kohlenstoff etc.) und/oder mineralischen Materialien, erweisen, welches möglichst homogen und gleichmäßig erfolgen sollte, so dass über die gesamte Fläche der Harzmatte eine einheitliche Faserverteilung gegeben ist.

Die DE 41 13 843 A1 beschreibt eine Anlage zur Herstellung derartiger Faserplatten, wobei die Fasern mittels einer nicht näher beschriebenen Auftragseinrichtung auf die mittels eines Trägerbandes an der Auftragseinrichtung vorbeigeführten Harzmatten aufgebracht werden. Zur Abscheidung von in dem zugesetzten Fasermaterial vorhandenem Feingut sind Zyklone vorgesehen, welche ausschließlich der Aufreinigung der Fasern dienen und von welchen die Fasern in eine Schleusenwalze nach Art einer Zellenradschleuse überführt werden, welche wiederum zur Überführung der Fasern an die Auftragseinrichtung dient.

Der Erfindung liegt die Aufgabe zugrunde, ein Verfahren und eine Vorrichtung zum gleichmäßigen Aufbringen von Fasern auf Substrat der eingangs genannten Art vorzuschlagen, welche auf einfache und kostengünstige Weise für eine gleichmäßige und homogene Verteilung der Fasern auf dem Substrat sorgt.

In verfahrenstechnischer Hinsicht wird diese Aufgabe bei einem Verfahren der eingangs genannten Art dadurch gelöst, dass die Fasern mittels eines Zyklons in einer im Wesentlichen senkrecht zu ihrer Förderrichtung angeordneten Ebene in Rotation versetzt und die in Rotation versetzten Fasern der dem Zyklon unmittelbar nachgeordneten, oberhalb des Substrates positionierten Auftragseinrichtung zugeführt werden, wobei als Auftragseinrichtung ein nach unten offener Kasten verwendet wird, welchem die Fasern an seiner oberen, der offenen Seite entgegengesetzten Seite zugeführt werden, so dass zumindest einige der Fasern im Innern des Kastens der Auftragseinrichtung infolge Zentrifugalkraft an die Seitenwände des Kastens beschleunigt werden, wonach sie infolge Gravitation auf das Substrat aufgebracht werden.

Zur Lösung dieser Aufgabe sieht die Erfindung bei einer Vorrichtung der eingangs genannten Art ferner vor, dass die Auftragseinrichtung einen nach unten offenen Kasten aufweist, dessen Zulauf an der seiner offenen Unterseite entgegengesetzten Oberseite angeordnet ist, und dass dem Kasten der Auftragseinrichtung ein Zyklon unmittelbar vorgeordnet ist, um die Fasern in einer im Wesentlichen senkrecht zu ihrer Förderrichtung angeordneten Ebene in Rotation zu versetzen und die in Rotation versetzten Fasern dem Kasten derart zuzuführen, dass zumindest einige der Fasern im Innern des Kastens der Auftragseinrichtung infolge Zentrifugalkraft an die Seitenwände des Kastens beschleunigbar sind, wonach sie infolge Gravitation aus dem nach unten offenen Kasten auszutreten vermögen.

Die erfindungsgemäße Ausgestaltung gewährleistet überraschenderweise eine äußerst homogene und gleichmäßige Verteilung der aus dem unten offenen Kasten der Auftragseinrichtung austretenden Fasern auf ein unterhalb desselben befindliches bzw. vorbeigeführtes Substrat, wie beispielsweise einer Harzmatte, indem die aus dem Zyklon austretenden Fasern unmittelbar an den Kasten der Auftragseinrichtung überführt werden, wo zumindest einige Fasern aufgrund ihrer Rotation infolge Zentrifugalkraft gegen die seitlichen Wandungen des Kastens geschleudert und dort reflektiert werden, wonach sie infolge Gravitation aus der unteren, offenen Seite des Kastens austreten und homogen auf das Substrat aufgebracht werden. Mit "dem Zyklon unmittelbar nachgeordnet" ist im Sinne der Erfindung gemeint, dass sich der Kasten der Auftragseinrichtung ohne Zwischenanordnung weiterer Komponenten, wie Schleusen, Fördereinrichtungen oder dergleichen, welche die mittels des Zyklons induzierte Rotationsbewegung der Fasern etwa senkrecht zu ihrer Förderrichtung (vom Zyklon in Richtung der Auftragseinrichtung) unterbinden würden, an den Auslauf des Zyklons anschließt, wobei der Kasten entweder direkt oder mittels einer Verbindungsleitung, wie eines Rohres, an den Auslauf des Zyklons angeschlossen sein kann. Die Länge eines solchen Rohres muss dabei derart gewählt sein, dass die Fasern beim Eintritt in den Kasten der Auftragseinrichtung noch eine hinreichende Rotationsgeschwindigkeit besitzen, um über den gesamten Querschnitt des Kastens verteilt zu werden, wobei diese Länge von der Rotationsgeschwindigkeit der Fasern abhängt, wobei die maximale Länge einer solchen Rohrverbindung, welche den obigen Kriterien genügt, auf einfache Weise experimentell ermittelt werden kann. Die Erfindung macht es dabei möglich, dass der Zyklon nicht notwendigerweise vertikal angeordnet werden muss, sondern er kann insbesondere dann, wenn ein nur geringer Bauraum zur Verfügung steht, auch unter einem endlichen Winkel, insbesondere von bis zu etwa 75°, in Bezug auf die Vertikale geneigt angeordnet sein, wobei er mittels eines Rohrkrümmer an den Kasten der Auftragseinrichtung angeschlossen sein kann.

Die Erfindung macht es ferner möglich, dass die Fasern auf ein im Wesentlichen plattenförmiges Substrat, insbesondere in Form von abgelängten oder endlosen Harzmatten, aufgebracht werden, wobei es selbstverständlich gleichfalls denkbar ist, dass die Fasern auf (vor)geformte dreidimensionale Substrate, welche zweckmäßig ebenfalls aus aushärtbaren oder erstarrenden Harzen gebildet oder zumindest oberflächig hiermit beschichtet sind, aufgebracht werden.

In Bezug auf eine geeignete Rotationsgeschwindigkeit der Fasern hat es sich als vorteilhaft erwiesen, wenn die Fasern mittels des Zyklons mit einer Umlaufgeschwindigkeit zwischen etwa 1000/min und etwa 3000/min, insbesondere zwischen etwa 1200/min und etwa 2800/min, in Rotation versetzt werden, um für eine gleichmäßige Verteilung am Ausgang des Kastens der Auftragseinrichtung zu sorgen.

Darüber hinaus hat es sich als vorteilhaft erwiesen, wenn der Kasten der Auftragseinrichtung mit vertikalem Abstand, insbesondere zwischen 10 cm und 100 cm, vorzugsweise zwischen 25 cm und 75 cm, oberhalb des Substrates angeordnet wird, so dass die Fasern in mehr oder minder "freiem Fall" auf das Substrat aufgetragen werden.

Im Hinblick auf eine besonders gleichmäßige und homogene Faserverteilung über den Querschnitt des Kastens und somit über die Fläche des Substrates hinweg zu sorgen, sieht eine vorteilhafte Ausgestaltung des erfindungsgemäßen Verfahrens vor, dass ein Kasten mit einem im Wesentlichen rechteckigen Innenquerschnitt verwendet wird. Dabei wurde gefunden, dass ein solcher, mit einem im Wesentlichen rechteckigen Innenquerschnitt versehener Kasten zu einer gleichmäßigeren Faserverteilung zu führen vermag als beispielsweise ein mit einem runden oder ovalen Querschnitt versehener Kasten, in welchem die Fasern zu einer Anreicherung im radial äußeren randbereich tendieren, während im zentralen Bereich eine Verarmung an Fasern auftreten kann.

In vorteilhafter Ausgestaltung kann der Kasten der Auftragseinrichtung im Wesentlichen die Form eines nach unten offenen Quaders aufweisen, wobei die gegenüberliegenden seitlichen Wandungen eines solchen Quaders nicht notwendigerweise exakt parallel zueinander verlaufen müssen, sondern auch geringfügig konkav oder konvex gekrümmt sein können.

Der Zulauf des Kastens der Auftragseinrichtung ist vorzugsweise in der Mitte seiner Oberseite angeordnet, um für eine gleichmäßige Verteilung der Fasern, nachdem sie über den Zulauf in den Kasten eingetreten sind, radial nach außen zu sorgen.

Um für eine möglichst ungehinderte Überführung der rotatorisch beschleunigten Fasern aus dem Zyklon in den Kasten der Auftragseinrichtung zu sorgen, kann in vorteilhafter Ausgestaltung vorgesehen sein, dass der Querschnitt des Zulaufs des Kastens der Auftragseinrichtung sowie eines gegebenenfalls zwischen dem Ablauf des Zyklons und dem Kasten angeordneten Rohres etwa dem Querschnitt des Ablaufs des Zyklons entspricht, so dass die in Rotation versetzten Fasern insbesondere nicht an Querschnittsverengungen abgebremst werden.

Gemäß einer Weiterbildung kann vorgesehen sein, dass zumindest zwei entgegengesetzte Seitenwände des Kastens der Auftragseinrichtung verstellbar sind, um den Querschnitt des Kastens zu verändern und die Auftragseinrichtung auf diese Weise auf Substrate unterschiedlicher Breite oder Länge anpassen oder auch die Verteilungsdichte an Fasern modifizieren zu können.

Zu diesem Zweck ist es beispielsweise möglich, dass zumindest zwei entgegengesetzte Seitenwände des Kastens der Auftragsrichtung etwa senkrecht zu ihrer Erstreckungsebene, z.B. mittels Linearführungen, linear verlagerbar sind, und/oder zumindest zwei entgegengesetzte Seitenwände des Kastens der Auftragseinrichtung können entlang einer randseitig seiner Oberseine angeordneten Schwenkachse, z.B. mittels Scharnieren, verschwenkbar sein. Im Falle solcher verstellbarer Seitenwände sollten letztere randseitige, in Bezug auf die jeweilige Seitenwand im Wesentlichen senkrecht angeordnete Blenden aufweisen, welche sich in Richtung der benachbarten Seitenwände und der Oberseite des Kastens erstrecken und diese zumindest teilweise überlappen, so dass der Kasten umfangsseitig stets gänzlich geschlossen ist und keine rotatorisch beschleunigten Fasern seitlich austreten können.

Überdies kann vorgesehen sein, dass die Fasern stromauf des Zyklons, insbesondere mittels einer Schneidemühle, zerkleinert und sodann dem Zyklon aufgegeben werden, so dass insbesondere auch die Verarbeitung von unsortierten faserförmigen Reststoffabfällen unter Vermeidung aufwändiger Aufbereitungsprozesse, wie Fraktionierungen oder Sortierungen, möglich ist. Dem Zyklon kann folglich eine Faser-Zerkleinerungseinrichtung, insbesondere in Form einer Schneidemühle, vorgeordnet sein, welche überdies mit geeigneten Siebeinsätzen oder dergleichen ausgestattet sein kann, um eine definierte Einstellung der gewünschten Faserparameter, wie insbesondere Faserform und -länge, zu gewährleisten.

Darüber hinaus hat es sich als vorteilhaft erwiesen, wenn die Fasern pneumatisch, insbesondere mittels eines Gebläses, dem Zyklon zugeführt werden. Dem Zyklon kann in diesem Fall folglich eine pneumatische Fördereinrichtung für die Fasern, insbesondere in Form eines Gebläses, vorgeordnet sein, welche im Falle einer oben erwähnten Zerkleinerungseinrichtung im Bereich des Ausgangs derselben angeordnet sein kann, um die zerkleinerten Fasern pneumatisch dem Zyklon aufzugeben.

Die Menge an Fasern bzw. das sogenannten Flächengewicht der Fasern auf dem Substrat kann im Übrigen durch die Menge an dem Zyklon zugeführten Fasern, beispielsweise durch entsprechende Einstellung des Durchsatzes einer dem Zyklon vorgeordneten Zerkleinerungseinrichtung, und/oder - im Falle des Aufbringens der Fasern auf ein endloses Substrat - durch die Geschwindigkeit des unter der Auftragseinrichtung vorbeigeführten Endlossubstrates, z.B. in Form einer Substratbahn, eingestellt werden.

Wie bereits angedeutet, bietet sich die Erfindung unter anderem - wenn auch nicht ausschließlich - für SMC-Anlagen an, bei welchen
- das endlose Substrat kontinuierlich; oder
- eine Mehrzahl an abgelängten Substraten nacheinander semikontinuierlich
unter dem Kasten der Auftragseinrichtung vorbeigeführt werden kann. Dem Kasten kann in diesem Fall ein unterhalb desselben angeordnetes Trägerband, insbesondere einer SMC-Anlage, zugeordnet sein, auf welchem das Substrat, wie ein Sheet Molding Compound (SMC), unter der unteren offenen Seite des Kastens vorbeibewegt wird.

Wie ebenfalls bereits angedeutet, kann der Kasten hierbei vorzugsweise mit vertikalem Abstand, insbesondere zwischen 10 cm und 100 cm, vorzugsweise zwischen 25 cm und 75 cm, oberhalb des Trägerbandes angeordnet sein. Wie ebenfalls bereits angedeutet, kann der Zyklon ferner unter einem Winkel zwischen 0° und 75°, insbesondere zwischen 0° und 60°, vorzugsweise zwischen 0° und 45°, in Bezug auf die Vertikale geneigt angeordnet sein.

Das erfindungsgemäße Verfahren eignet sich folglich hervorragend zur Herstellung von im Wesentlichen plattenförmigen oder auch dreidimensionalen Faser-/Kunststoffverbund-Formteilen oder -Halbzeugen, wobei es grundsätzlich auch überall dort zum Einsatz gelangen kann, wo eine gleichmäßige und homogene Verteilung von Fasern auf im Wesentlichen flächige oder dreidimensionale Substrate erwünscht ist.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine schematische Seitenansicht einer Ausführungsform einer erfindungsgemäßen Vorrichtung zum gleichmäßigen Aufbringen von Fasern auf ein Substrat;
- Fig. 2: eine der Fig. 1 entsprechende Seitenansicht einer weiteren Ausführungsform einer erfindungsgemäßen Vorrichtung zum gleichmäßigen Aufbringen von Fasern auf ein Substrat;
- Fig. 3: eine geschnitten dargestellte perspektivische Ansicht des Zyklons der Vorrichtung gemäß Fig. 1 und 2;
- Fig. 4: eine Seitenansicht des Kastens der Auftragseintung der Vorrichtung gemäß Fig. 1 und 2 in Richtung des Pfeils IV gemäß Fig. 1 und 2 betrachtet;
- Fig. 5: eine Seitenansicht des Kastens der Auftragseintung gemäß Fig. 4 in Richtung des Pfeils V gemäß Fig. 4 betrachtet;
- Fig. 6: eine Draufsicht auf den Kasten der Auftragseintung gemäß Fig. 4 und 5 von oben;
- Fig. 7: eine Detailansicht des Kastens der Auftragseinrichtung entsprechend dem Ausschnitt VII gemäß Fig. 4;
- Fig. 8: eine Detailansicht des Kastens der Auftragseinrichtung entsprechend dem Ausschnitt VIII gemäß Fig. 6;
- Fig. 9: eine Detailansicht des Kastens der Auftragseinrichtung entsprechend dem Ausschnitt IX gemäß Fig. 5; und
- Fig. 10: eine fotographische Ansicht von mittels der Vorrichtung gemäß Fig. 1 bis 9 auf ein flächiges Substrat aufgebrachten Kurzfasern.

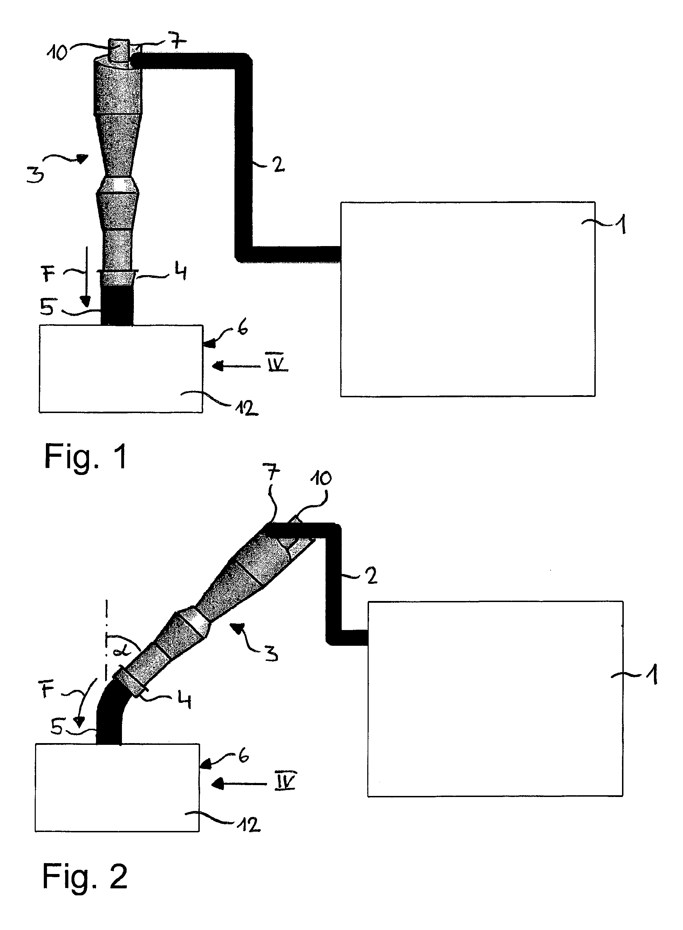

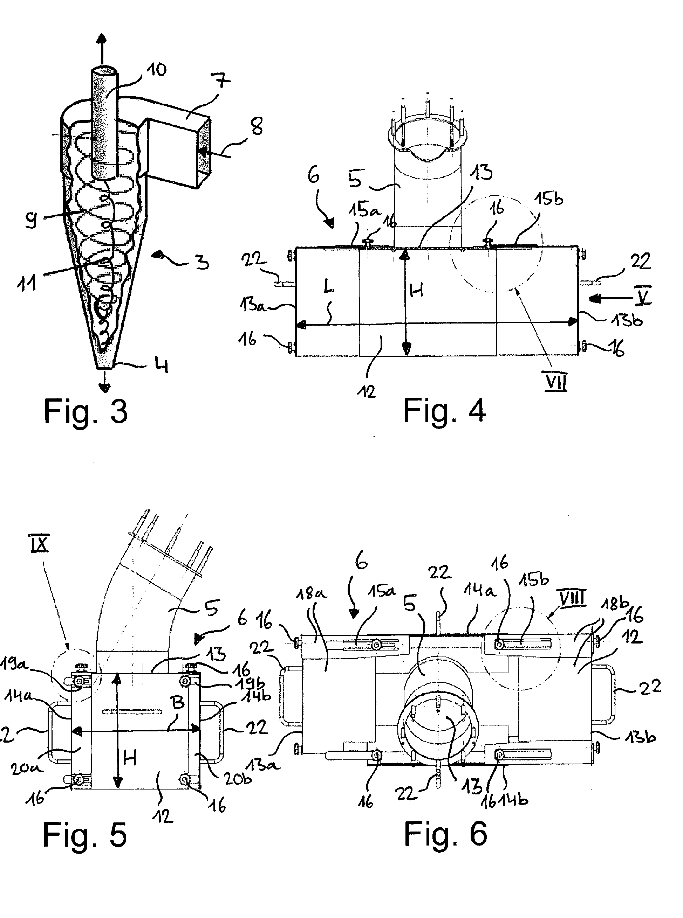

In Fig. 1 ist eine schematische Ansicht einer Vorrichtung zum gleichmäßigen Aufbringen von Fasern auf ein nicht gezeigtes Substrat wiedergegeben. Die Vorrichtung umfasst eine beispielsweise in Form einer Schneideeinrichtung ausgestaltete Zerkleinerungseinrichtung 1, welcher Fasern unterschiedlicher Länge einschließlich Faserabfällen aufgegeben werden kann und welche die Fasern auf eine gewünschte Längenfraktion zu zerkleinern vermag. Der Zerkleinerungseinrichtung 1 nachgeordnet ist eine zeichnerisch nicht dargestellte Fördereinrichtung für die zerkleinerten Fasern, welche zum Überführen derselben von der Zerkleinerungseinrichtung an einen weiter unten näher erläuterten Zyklon 3 dient. Bei der Fördereinrichtung, welche im Übrigen auch in die Zerkleinerungseinrichtung 1 integriert sein kann und sich beispielsweise an einen Mahlraum derselben (ebenfalls nicht gezeigt) anschließt, handelt es sich vorzugsweise um eine pneumatische Fördereinrichtung, wie z.B. ein Gebläse. An die Zerkleinerungseinrichtung 1 - oder genauer: an deren Fördereinrichtung - schließt sich über eine Förderleitung 2, in welcher die Fasern z.B. pneumatisch gefördert werden, ein Zyklon 3 an, welcher nachstehend unter Bezugnahme auf die Fig. 3 näher erläutert ist und zum Beaufschlagen der Fasern mit einer Rotationsbewegung dient, wobei die Fasern in einer etwa senkrecht zu ihrer Förderrichtung F angeordneten Ebene in Rotation versetzt werden. An den unteren Auslauf 4 des Zyklons 3 schließt sich über eine weitere Förderleitung 5 mit etwa entsprechendem Querschnitt wie der Auslauf 4 des Zyklons 3 eine Auftragseinrichtung 6 unmittelbar an, welche nachstehend unter Bezugnahme auf die Fig. 4 bis 9 näher beschrieben ist.

Die in Fig. 2 schematisch dargestellte Ausführungsform einer Vorrichtung zum gleichmäßigen Aufbringen von Fasern auf ein wiederum nicht gezeigtes Substrat unterscheidet sich von der Vorrichtung gemäß Fig. 1 dadurch, dass der Zyklon 3 unter einem endlichen Winkel α von im vorliegenden z.B. etwa 45° in Bezug auf eine vertikale Achse angeordnet ist, was insbesondere dann zweckmäßig ist, wenn der Vorrichtung eine nur begrenzte Bauhöhe zur Verfügung steht. Die den unteren Auslauf 4 des Zyklons 3 mit der Auftragseinrichtung 6 unmittelbar verbindende Förderleitung 5 kann in diesem Fall eine entsprechende Krümmung aufweisen, sofern die Fasern auf ein weitgehend horizontal angeordnetes Substrat (nicht gezeigt) aufgebracht werden sollen.

Wie insbesondere aus Fig. 3 ersichtlich, besitzt der Zyklon 3 einen oberen Einlauf 7, welcher exzentrisch in Bezug auf die Zyklonachse und senkrecht zu dieser angeordnet ist und über welchen die beispielsweise in einem Gas- oder Luftstrom suspendierten Fasern aus der Förderleitung 2 (vgl. Fig. 1 und 2) in den Zyklon 3 gelangen (Pfeil 8 der Fig. 3). Im Innern des Zyklons 3 werden die Fasern in einer etwa senkrecht zur ihrer Förderrichtung F bzw. zur Zyklonachse angeordneten, in Fig. 3 horizontalen Ebene in Rotation versetzt, wie es mit der (äußeren) Spirallinie 9 angedeutet ist. Mit einer derartigen Rotationsbewegung beaufschlagt, verlassen die Fasern den Zyklon 3 über dessen unteren Auslauf 4. Der Zyklon 3 kann überdies mit einem Trennrohr 10 ausgestattet sein, welches am oberen, dem unteren Auslauf 4 entgegengesetzten Ende des Zyklons 3 aus diesem austritt und sich in den oberen Abschnitt seines Innenraumes erstreckt und welches zur Abscheidung von Feinpartikeln dient, welche den Zyklon 3 über das Trennrohr 10 verlassen, wie es mit der (inneren) Spirallinie 11 angedeutet ist. Der Zyklon 3 kann auf diese Weise nicht nur zur rotatorischen Beschleunigung der Fasern, sondern auch zu deren Reinigung von Feinpartikeln dienen, wie es als solches aus der eingangs zitierten DE 41 13 843 A1 bekannt ist.

In den Fig. 4 bis 9 ist ein Ausführungsbeispiel einer Auftragseinrichtung 6 der Vorrichtung gemäß Fig. 1 und 2 wiedergegeben. Wie hieraus hervorgeht, weist die Auftragseinrichtung 6 einen nach unten offenen Kasten 12 auf, welcher im vorliegenden Fall einen etwa rechteckigen Innenquerschnitt aufweist und die Form eines nach unten offenen Quaders besitzt. Wie insbesondere aus Fig. 6 ersichtlich, ist der Zulauf 13 des Kastens 12 in der Mitte seiner Oberseite angeordnet, wobei der runde, insbesondere kreisrunde, Querschnitt des Zulaufs 13 dem der rohrförmigen Förderleitung 5 sowie des unteres Auslaufs 4 des Zyklons 3 (siehe Fig. 3) entspricht, um die mittels des Zyklons 3 auf die Fasern induzierte Rotationsbewegung nicht nennenswert abzubremsen. Die Abmessungen des Kastens 12 können insbesondere in Bezug auf seine Länge L (Fig. 4) an die Breite des ruhendes oder kontinuierlich bewegten Substrates (nicht gezeigt), auf welches die Fasern aufgebracht werden sollen, angepasst sein. Die Breite B und die Höhe H (Fig. 5 und 6) sollten vorzugsweise wenigstens ein Viertel, insbesondere wenigstens ein Drittel, der Länge B betragen. Beim vorliegenden Ausführungsbeispiel beträgt die Länge L z.B. etwa 80 cm, die Breite B z.B. etwa 40 cm und die Höhe H z.B. etwa ebenfalls 40 cm. Der vertikale Abstand zu dem unterhalb des Kastens 12 der Auftragseinrichtung 6 befindlichen, nicht zeichnerisch dargestellten Substrates beträgt beispielsweise etwa 50 cm.

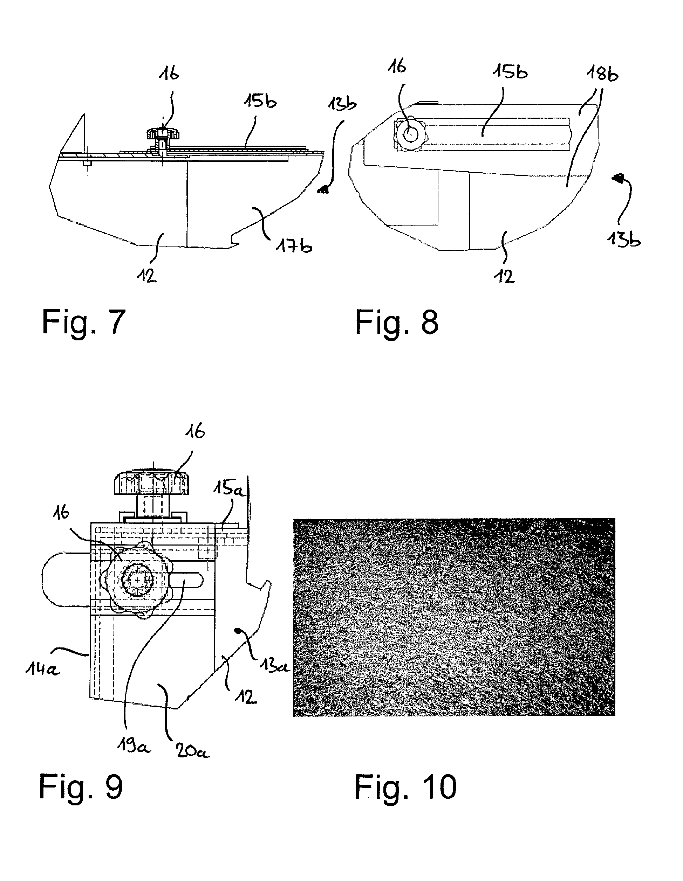

Zumindest zwei entgegengesetzte Seitenwände 13a, 13b; 14a, 14b des Kastens 12 der Auftragseinrichtung 6 können ferner verstellbar sein, um die Abmessungen des Kastens 12 bzw. dessen Querschnitt an das jeweilige Substrat anpassen zu können. Beim vorliegenden Ausführungsbeispiel ist dies dadurch gewährleistet, dass die Seitenwände 13a, 13b (Fig. 4, 6, 7 und 8) des Kastens 12 mittels an der Oberseite des Kastens 12 angeordneter Linearführungen 15a, 15b senkrecht zu ihrer Ersteckungsebene linear verlagerbar und mittels Schrauben 16 in der gewünschten Position feststellbar sind. Die verstellbaren Seitenwände 13a, 13b weisen an ihren Rändern darüber hinaus in Bezug auf ihre Erstreckungsebene senkrecht angeordnete Blenden 17b, 18a, 18b (Fig. 6, 7 und 8) auf, von denen sich die Blenden 17b (Fig. 7) in Richtung der benachbarten Seitenwände 14a, 14b (Fig. 6) und parallel zu diesen erstrecken und diese teilweise überlappen, so dass der Kasten 12 stets - abgesehen von seiner offenen Unterseite - allseitig geschlossen ist Die Blenden 18a, 18b erstrecken sich gleichfalls senkrecht zur Erstreckungsebene der Seitenwände 13a, 13b, aber parallel zur Oberseite des Kastens 12 und diese überlappend, wobei deren randseitigen Abschnitte ferner zur Anordnung der Führung 15a, 15b dienen, welche im Übrigen in Form je eines Langloches ausgebildet sein können, welches mit einem länglichen Profil an der Oberseite des Kastens 12 fluchtet und zum Hindurchführen der an dem länglichen Profil befestigbaren Schrauben 16 unter Festklemmen der Blenden 18, 18b und somit der zugehörigen Seitenwand 13a, 13b dienen kann.

In ähnlicher Weise weisen sind die senkrecht zu den verstellbaren Seitenwänden 13a, 13b angeordneten, verstellbaren Seitenwände 14a, 14b (Fig. 5, 6 und 9) des Kastens 12 mittels an den benachbarten Seitenwänden 13a, 13b angeordneter Linearführungen 19a, 19b (Fig. 5 und 9) senkrecht zu ihrer Ersteckungsebene linear verlagerbar und mittels Schrauben 16 in der gewünschten Position feststellbar. Die verstellbaren Seitenwände 14a, 14b weisen an ihren Rändern gleichfalls in Bezug auf ihre Erstreckungsebene senkrecht angeordnete Blenden 20a, 20b (Fig. 5 und 9) auf, welche sich in Richtung der benachbarten Seitenwände 12a, 13b (Fig. 9) und parallel zu diesen erstrecken und diese teilweise überlappen. Wie in Fig. 6 angedeutet, können sowohl die Seitenwände 13a, 13b als auch die Seitenwände 14a, 14b insbesondere teleskopierbar sein, um eine Verstellung sämtlicher Seitenwände 13a, 13b, 14a, 14b zu gewährleisten. Darüber hinaus sind die Seitenwände 13a, 13b, 14a, 14b mit Handgriffen 22 (Fig. 4 bis 6) ausgestattet, um sie anlässlich ihres Verstellens einfach ergreifen zu können.

Alternativ zu einer linearen Verstellung zumindest einiger Seitenwände 13a, 13b 14a, 14b wäre es beispielsweise auch denkbar, dass zumindest zwei entgegengesetzte Seitenwände 13a, 13b; 14a, 14b entlang ihres oberen, der Oberseite des Kastens 6 zugewandten Randes verschwenkbar sind (nicht dargestellt).

Während des Betriebs der Vorrichtung werden die in der Zerkleinerungseinrichtung 1 (Fig. 1 und 2) zerkleinerten Fasern in dem Zyklon 3 (Fig. 3) in Rotation 9 versetzt und gelangen über die Zuführleitung 5 - nach wie vor mit einer Rotationsbewegung in einer etwa senkrecht zu ihrer Förderrichtung F angeordneten Ebene beaufschlagt - in den dem Zyklon 3 unmittelbar nachgeordneten Kasten 12 der Auftragseinrichtung 6, in dessen Innern zumindest eine Mehrzahl der in Rotation versetzten Fasern radial gegen die Seitenwände 13a, 13b, 14a, 14b geschleudert, von diesen reflektiert und dabei gleichmäßig über den Querschnitt des Kastens 12 verteilt werden, woraufhin sie infolge Schwerkraft aus der offenen unteren Seite des Kastens 12 austreten und auf ein unterhalb des Kastens 12 positioniertes Substrat (nicht dargestellt) gleichmäßig aufgebracht werden.

Fig. 10 zeigt ein Foto eines Substrates in Form einer Harzmatte, auf welches mittels der oben beschriebenen Vorrichtung Glasfasern aufgebracht worden sind; die Drehzahl des Zyklons betrug hierbei 2000/min. Wie aus Fig. 10 ersichtlich, sind die Fasern über den gesamten Querschnitt des Substrates gleichmäßig verteilt, so dass dem Substrat nach Aushärten des Harzes desselben eine homogene Festigkeit und Zähigkeit verliehen werden kann.

## Patentansprüche

1. Verfahren zum gleichmäßigen Aufbringen von Fasern auf ein Substrat, insbesondere zur Herstellung von im Wesentlichen plattenförmigen oder dreidimensionalen Faser-/Kunststoffverbund-Formteilen oder -Halbzeugen, indem die Fasern einer Auftragseinrichtung (6) zugeführt und von dieser auf das Substrat aufgebracht werden, **dadurch gekennzeichnet, dass** die Fasern mittels eines Zyklons (3) in einer im Wesentlichen senkrecht zu ihrer Förderrichtung (F) angeordneten Ebene in Rotation versetzt und die in Rotation versetzten Fasern der dem Zyklon (3) unmittelbar nachgeordneten, oberhalb des Substrates positionierten Auftragseinrichtung (6) zugeführt werden, wobei als Auftragseinrichtung (6) ein nach unten offener Kasten (12) verwendet wird, welchem die Fasern an seiner oberen, der offenen Unterseite entgegengesetzten Seite zugeführt werden, so dass zumindest einige.der Fasern im Innern des Kastens (12) der Auftragseinrichtung (6) infolge Zentrifugalkraft an die Seitenwände (13a, 13b, 14a, 14b) des Kastens (12) beschleunigt werden, wonach sie infolge Gravitation auf das Substrat aufgebracht werden.

2. Verfahren nach Anspruch 1, **dadurch gekennzeichnet, dass** die Fasern auf ein im Wesentlichen plattenförmiges Substrat, insbesondere in Form von abgelängten oder endlosen Harzmatten, aufgebracht werden.

3. Verfahren nach Anspruch 1 oder 2, **dadurch gekennzeichnet, dass** die Fasern mit einer Umlaufgeschwindigkeit zwischen 1000/min und 3000/min, insbesondere zwischen 1200/min und 2800/min, in Rotation versetzt werden.

4. Verfahren nach einem der Ansprüche 1 bis 3, **dadurch gekennzeichnet, dass** der Kasten (12) der Auftragseinrichtung (6) mit vertikalem Abstand, insbesondere zwischen 10 cm und 100 cm, vorzugsweise zwischen 25 cm und 75 cm, oberhalb des Substrates angeordnet wird.

5. Verfahren nach einem der Ansprüche 1 bis 4, **dadurch gekennzeichnet, dass**
- das endlose Substrat kontinuierlich; oder
- eine Mehrzahl an abgelängten Substraten nacheinander semikontinuierlich
unter dem Kasten (12) der Auftragseinrichtung (6) vorbeigeführt wird bzw. werden.

6. Verfahren nach einem der Ansprüche 1 bis 5, **dadurch gekennzeichnet, dass** die Fasern
- stromauf des Zyklons (3), insbesondere mittels einer Schneidemühle (1), zerkleinert und sodann dem Zyklon (3) aufgegeben werden; und/oder
- pneumatisch, insbesondere mittels eines Gebläses, dem Zyklon (3) zugeführt werden.

7. Vorrichtung zum gleichmäßigen Aufbringen von Fasern auf ein Substrat, insbesondere zur Durchführung eines Verfahrens nach einem der vorangehenden Ansprüche, mit einer Auftragseinrichtung (6), welcher die Fasern zuführbar sind, **dadurch gekennzeichnet, dass** die Auftragseinrichtung (6) einen nach unten offenen Kasten (12) aufweist, dessen Zulauf (13) an der seiner offenen Unterseite entgegengesetzten Oberseite angeordnet ist, und dass dem Kasten (12) der Auftragseinrichtung (6) ein Zyklon (3) unmittelbar vorgeordnet ist, um die Fasern in einer im Wesentlichen senkrecht zu ihrer Förderrichtung (F) angeordneten Ebene in Rotation zu versetzen und die in Rotation versetzten Fasern dem Kasten (12) derart zuzuführen, dass zumindest einige der Fasern im Innern des Kastens (12) der Auftragseinrichtung (6) infolge Zentrifugalkraft an die Seitenwände (13a, 13b, 14a, 14b) des Kastens (12) beschleunigbar sind, wonach sie infolge Gravitation aus dem nach unten offenen Kasten (12) auszutreten vermögen.

8. Vorrichtung nach Anspruch 7, **dadurch gekennzeichnet, dass** der Kasten (12) der Auftragseinrichtung (6) einen im Wesentlichen rechteckigen Innenquerschnitt aufweist.

9. Vorrichtung nach Anspruch 7 oder 8, **dadurch gekennzeichnet, dass** der Kasten (12) der Auftragseinrichtung (6) im Wesentlichen die Form eines nach unten offenen Quaders aufweist.

10. Vorrichtung nach einem der Ansprüche 7 bis 9, **dadurch gekennzeichnet, dass** der Zulauf (13) des Kastens (12) der Auftragseinrichtung (6) in der Mitte seiner Oberseite angeordnet ist.

11. Vorrichtung nach einem der Ansprüche 7 bis 10, **dadurch gekennzeichnet, dass** der Querschnitt des Zulaufs (13) des Kastens (12) der Auftragseinrichtung (6) sowie eines gegebenenfalls zwischen dem Ablauf (4) des Zyklons (3) und dem Kasten (12) angeordneten Rohres (5) etwa dem Querschnitt des Ablaufs (4) des Zyklons (3) entspricht.

12. Vorrichtung nach einem der Ansprüche 7 bis 11, **dadurch gekennzeichnet, dass** zumindest zwei entgegengesetzte Seitenwände (13a, 13b; 14a, 14b) des Kastens (12) der Auftragseinrichtung (6) verstellbar sind, um den Querschnitt des Kastens (12) zu verändern.

13. Vorrichtung nach Anspruch 12, **dadurch gekennzeichnet, dass** zumindest zwei entgegengesetzte Seitenwände (13a, 13b; 14a, 14b) des Kastens (12) der Auftragsrichtung (6)
- etwa senkrecht zu ihrer Erstreckungsebene linear verlagerbar und/oder
- entlang einer randseitig seiner Oberseine angeordneten Schwenkachse verschwenkbar
sind.

14. Vorrichtung nach Anspruch 12 oder 13, **dadurch gekennzeichnet, dass** die verstellbaren Seitenwände (13a, 13b; 14a, 14b) randseitige, in Bezug auf die jeweilige Seitenwand (13a, 13b; 14a, 14b) im Wesentlichen senkrecht angeordnete Blenden (17b, 18a, 18b; 20a, 20b) aufweisen, welche sich in Richtung der benachbarten Seitenwände (14a, 14b; 13a, 13b) und der Oberseite des Kastens (12) erstrecken und diese zumindest teilweise überlappen.

15. Vorrichtung nach einem der Ansprüche 7 bis 14, **dadurch gekennzeichnet, dass** dem Zyklon (3)
- eine Faser-Zerkleinerungseinrichtung (1), insbesondere in Form einer Schneidemühle, und/oder
- eine pneumatische Fördereinrichtung für die Fasern, insbesondere in Form eines Gebläses
vorgeordnet ist.

16. Vorrichtung nach einem der Ansprüche 7 bis 15, **dadurch gekennzeichnet, dass** dem Kasten (12) ein unterhalb desselben angeordnetes Trägerband, insbesondere einer SMC-Anlage, zugeordnet ist, wobei der Kasten (12) insbesondere mit vertikalem Abstand, insbesondere zwischen 10 cm und 100 cm, vorzugsweise zwischen 25 cm und 75 cm, oberhalb des Trägerbandes angeordnet ist.

17. Vorrichtung nach einem der Ansprüche 7 bis 16, **dadurch gekennzeichnet, dass** der Zyklon (3) unter einem Winkel zwischen 0° und 75°, insbesondere zwischen 0° und 60°, in Bezug auf die Vertikale geneigt angeordnet ist.
